# EUROPEAN PATENT APPLICATION

(11) **EP 1 793 185 A2**
(43) Date of publication of application: **06.06.2007**
(21) Application number: 06256062.8
(22) Date of filing: 28.11.2006
(51) Int. Cl.: F25D 3/10, F25D 29/00

(54) **Controlled rate freezer for biological material**

(30) Priority: 02.12.2005 GB 0524613
(71) Applicant: Planer Plc., Sunbury TW16 7HD (GB)
(72) Inventor: Butler, Stephen James, Wokingham RG41 3GB (GB)
(74) Representative: Hocking, Adrian Niall

(57) **Abstract**

A controlled rate freezer (10) for the controlled freezing of biological material, the freezer comprises a first chamber (14) for holding biological material to be frozen, a second chamber (20) for holding a cryogenic substance, forced convection means (22, 24) for lowering the temperature of the first chamber (14) by forcibly moving air present in the first chamber (14) towards the second chamber (20) whereby heat transfer occurs at the second chamber (20), and control means (26) for monitoring the temperature of the first chamber (14) and controlling the forced convection means (22, 24) based on the monitored temperature, so that in use the lowering of the temperature of the first chamber (14), and thus the freezing of the biological material, follows a material-dependent predetermined optimum or substantially optimum freezing profile. The forced convection means includes two recirculating flow paths (32, 40) along which air in the first chamber (14) is movable at a rate controlled by the control means (26). The first flow path (32) is solely located in the first chamber (14) and spaced from the second chamber (20) so that air travelling on the first flow path (32) is not subjected to direct cooling at the second chamber (20), and the second flow path (40) meets the first flow path (32) and extends to the second chamber (20), so that air travelling on the second flow path (40) is subjected to cooling at the second chamber (20) and feeds the air thus cooled onto the first flow path (32).

## Description

The present invention relates to a controlled rate freezer, also known as a 'step freezer', for the controlled freezing of biological material.

Controlled rate freezers are known. US4712607 describes one such freezer. However, this freezer works solely on the principal of conduction with a cryogenic material held within the freezer, and utilises a heater to control the rate of freezing of the biological material.

Another arrangement of the conduction-type controlled rate freezer moves the biological material towards and away from the cryogenic substance.

The problem with conduction-type freezers is that they rely on points of physical contact to conduct heat away from the material being frozen. Material is typically contained within 'straws' or ampoules and, for example in the case of an embryo, are very small in relation to the container. Embryos are normally suspended within a liquid and the exact position within the sample container cannot be controlled. The result with a conduction freezer is that the absolute position of the embryo cannot be controlled relative to the points of contact of the freezing container to the conductive cold surface. Unpredictable cooling therefore results.

Direct-injection controlled rate freezers are also known. US20050241333 suggests one such arrangement. In this case, a solenoid valve is utilised to directly inject cryogenic fluid, typically liquid nitrogen, at high pressure into a coil within the chamber in which the biological material is being held. The cryogenic fluid, in vapour form, is forced into the chamber via holes or perforations in the coil, thus cooling the chamber.

The problem with this arrangement is that, not only is the solenoid valve particularly noisy, but it is also particularly unreliable, resulting in frequent breakage if not regularly replaced. It is extremely difficult to control freezing chamber temperature and maintain control stability in freezers of this type.

None of the above described prior art arrangements are portable. This is a significant problem, especially in the field of veterinary medicine, where biological material from animals, such as for IVF, must be transported to and from an on-site location, such as a farm, while being frozen to enable the procedure to be completed in a timely and efficient manner.

The present invention seeks to overcome all these problems.

According to a first aspect of the present invention, there is provided a controlled rate freezer for the controlled freezing of biological material having a material-dependent predetermined optimum freezing profile, the freezer comprising a first chamber for holding biological material to be frozen, a second chamber for holding a cryogenic substance, forced convection means for lowering the temperature of the first chamber by forcibly moving air present in the first chamber towards the second chamber whereby heat transfer occurs at the second chamber, and control means for monitoring the temperature of the first chamber and controlling the forced convection means based on the monitored temperature to lower the temperature of the first chamber and freeze the biological material in accordance with or substantially with the material-dependent predetermined optimum freezing profile, wherein the forced convection means includes two recirculating flow paths along which air in the first chamber is movable at a rate controlled by the control means, the first flow path being solely located in the first chamber and spaced from the second chamber so that air travelling on the first flow path is not subjected to direct cooling at the second chamber, and the second flow path meeting the first flow path and extending to the second chamber, so that air travelling on the second flow path is subjected to cooling at the second chamber and, once cooled, is fed onto the first flow path.

Preferable and/or optional features of the first aspect of the invention are set forth in claims 2 to 16, inclusive.

According to a second aspect of the invention, there is provided a method of controlled freezing of biological material, the method comprising the steps of : a) positioning biological material to be frozen in a first chamber; b) positioning a cryogenic substance in a second chamber; c) forcibly moving air present in the first chamber towards the second chamber, so that heat transfer occurs at the second chamber and thus lowers the temperature of the first chamber, two recirculating flow paths being provided along which the air in the first chamber is movable, the first flow path being solely located in the first chamber and spaced from the second chamber so that air travelling on the first flow path is not subjected to direct cooling at the second chamber, and the second flow path meeting the first flow path and extending to the second chamber, so that air travelling on the second flow path is subjected to cooling at the second chamber and, once cooled, is fed onto the first flow path; and d) monitoring the temperature of the first chamber and controlling a rate of movement of the air in the first chamber, along the two recirculating flow paths, based on the monitored temperature, so that the lowering of the temperature of the first chamber, and thus the freezing of the biological material, follows a material-dependent predetermined optimum or substantially optimum freezing profile.

The invention will now be more particularly described, by way of example only, with reference to the accompanying drawings, in which :
Figure 1 is a diagrammatic view showing a first embodiment of a controlled rate freezer, in accordance with the present invention, and showing first and second flow paths;
Figure 2 is a schematic longitudinal sectional view of a first chamber and conduit member of the freezer shown in Figure 1; and
Figure 3 is a diagrammatic view showing a second chamber of a second embodiment of a controlled rate freezer, in accordance with the present invention.

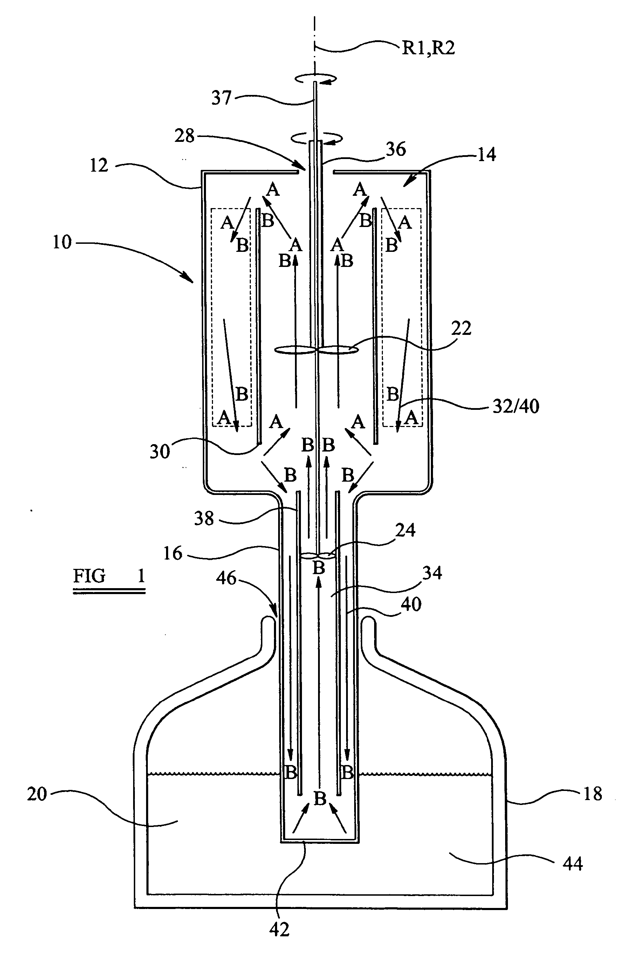

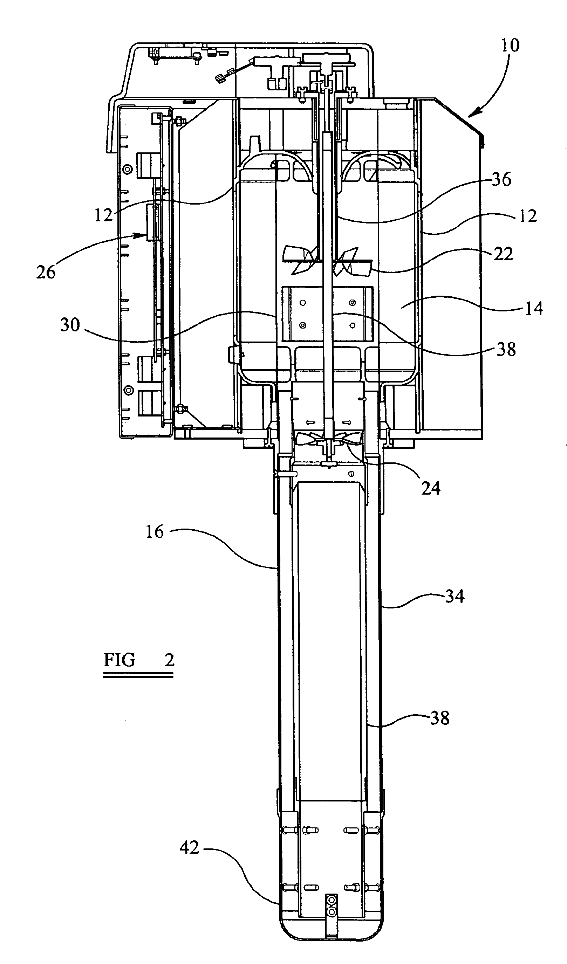

Referring firstly to Figures 1 and 2 of the drawings, there is shown a controlled rate freezer 10 which comprises a first housing 12 which includes a first chamber 14, a conduit member 16 which extends from the first chamber 14, a second housing 18 which includes a second chamber 20, two electrically operable fans 22 and 24, and control circuitry 26 for monitoring the temperature of the first chamber 14 and controlling the speed of the fans 22 and 24 based on the monitored temperature.

The first housing 12 is openable and closable to allow the insertion of biological material, typically contained within a 'straw', into the first chamber 14. The first chamber 14 is at atmospheric pressure and includes a vent 28 to provide for expansion and contraction of air within the first chamber 14.

A first arcuate, typically open-ended and cylindrical, baffle 30 is provided within the first chamber 14, and a first one of the two fans 22 is positioned generally centrally within the first baffle 30. The first baffle 30, in conjunction with interior surfaces of the first chamber 14, defines a first recirculating flow path 32 (arrows A in Figure 1) which is solely within the first chamber 14 and along which air in the first chamber 14 is forcibly movable by operation of the first fan 22.

The conduit member 16 extends from one wall of the first housing 12, typically coaxially with the rotational axis R1 of the first fan 22. The conduit member 16 defines an airflow passage 34 therewithin which opens out into the first chamber 14, adjacent to the first flow path 32.

A second one of the two fans 24 is located within the air flow passage 34, and has a rotational axis R2 which is preferably coaxial with the rotational axis R1 of the first fan 22. It is convenient to provide the first fan 22 with an open ended tubular first drive shaft 36 in which is rotatably received a second drive shaft 37 of the second fan 24.

A second arcuate baffle 38, again being typically open-ended and cylindrical, is provided in the airflow passage 34 of the conduit member 16, and around the second fan 24. The second baffle 38 extends along a major portion of the longitudinal extent of the airflow passage 34. The second baffle 38, in conjunction with interior surfaces of the conduit member 16, defines in part a second recirculating flow path 40 (arrows B) along which air from the first chamber 14 is forcibly movable by operation of the second fan 24.

Due to the coaxial positioning of the first and second fans 22 and 24, the first baffle 30 also defines a portion of the second recirculating flow path 40, as can be understood from Figure 1. Consequently, the first and second flow paths 32 and 40 intersect or meet and in part overlap.

The airflow passage 34 at the end 42 opposite the first chamber 14 is closed, consequently fluidly isolating the first and second chambers 14 and 20.

The second housing 18 is adapted to hold a cryogenic substance 44, such as liquid nitrogen, in the second chamber 20. The second chamber 20 is open to atmospheric pressure, and the cryogenic substance 44 is not pressurised.

The second housing 18 includes an opening 46 to the second chamber 20 through which the conduit member 16 is insertable. The second housing 18 is removable from the conduit member 16 and, for example, may include an internal screw thread at the opening 46 to allow screw-threaded engagement with a mating screw thread formed on the exterior surface of the conduit member 16.

The conduit member 16 results in the first and second housings 12 and 18, and thus the first and second chambers 14 and 20, being spaced from each other.

The control circuitry 26 preferably includes an input device (not shown), such as a keypad and/or a socket for connection to a computer terminal. Depending on the type of biological material to be cryogenically frozen, a predetermined material-dependent freezing profile can be inputted to the control circuitry 26. Cryogenic substance 44 is then positioned in the second housing 18, and the conduit member 16 is inserted into the second chamber 20 to contact the cryogenic substance 44.

With the biological material located in the first housing 12, the freezer 10 is activated, and the control circuitry 26 continuously monitors the temperature of the first chamber 14 at one or more positions. The first fan 22 is operated and the speed is controlled by the control circuitry 26 to circulate air in the first chamber 14 to provide a uniform temperature throughout the first chamber 14.

The second fan 24 is also operated and the speed is also controlled by the control circuitry 26. A portion of the air from the first chamber 14 is drawn, by the second fan 24, into the airflow passage 34 of the conduit member 16 and thus along the second flow path 40. The positioning of the fan 24 within the baffle 38 results in a pressure differential which causes the second flow path to extend down the outside of the baffle 38, along the interior surface of the conduit member 16, and then back up the interior of the baffle 38 until re-emerging back into the first chamber 14.

Heat transfer occurs between the air on the second flow path 40, due to conduction through the conduit member 16 caused by contact of the conduit member 16 with the cryogenic substance 44. The air on the second flow path 40, at the second chamber 20, is therefore rapidly cooled as it approaches, and at, the end 42 of the conduit member 16. This cooled air then moves back along the second flow path 40 until it meets the air on the first flow path 32 in the first chamber 14. The air circulating on the first flow path 32 is thus cooled, lowering the temperature of the first chamber 14 and thus the temperature of the biological material.

The temperature of the first chamber 14 is accurately controlled by regulating the speed of the first and second fans 22 and 24. To increase the rate of cooling in the first chamber 14, the speed of the second fan 24 is increased to force a greater volume of air along the second flow path 40, resulting in a greater volume of air being cooled at the second chamber 20, and thus being fed onto the first flow path 32. Conversely, to decrease the rate of cooling, the speed of the second fan 24 is decreased, resulting in a lesser volume of air being forced along the second flow path 40, and thus a lesser volume of air being cooled at the second chamber 20 and fed onto the first flow path 32. In this manner, the biological material can be accurately frozen in accordance with an optimum or substantially optimum time-dependent freezing profile.

The fans 22 and 24 and control circuitry 26 require a small amount of electrical power, and can consequently be run from batteries (not shown). This allows the freezer 10 to be portable and, for example, powered via a vehicle battery or local battery pack during transportation.

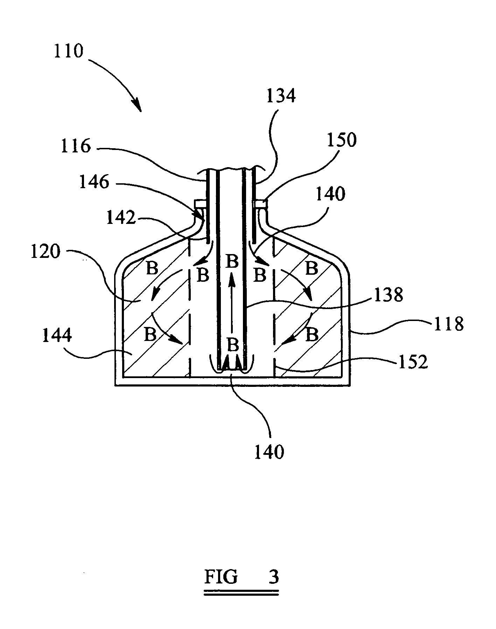

Referring now to Figure 3, a second embodiment of the controlled rate freezer 110 is shown. This embodiment differs from the first embodiment only in regards to second housing 118 and conduit member 116. As such, description relating to the first housing 12 is not repeated.

References of the second embodiment which are similar to those references in the first embodiment, refer to similar parts, and detailed description is omitted.

In this embodiment, end 142 of the conduit member 116 which is remote from the first housing 12 is open. Consequently, with the end 142 of the conduit member 116 received in the second housing 118, the first and second chambers 14 and 120 are fluidly interconnected via airflow passage 134 of the conduit member 116.

A second arcuate baffle or tube 138 positioned within the airflow passage 134 projects from the end 142 of the conduit member 116 and extends into the second chamber 120 to a position adjacent to an interior bottom surface of the second chamber 120.

The second flow path 140 (arrows B) thus extends into the second chamber 120 and back up a central portion of the airflow passage 134 defined by the second baffle 138. As such, air moving on the second flow path 140 directly contacts cryogenic substance 144, improving heat transfer.

Opening 146 of the second housing 118 includes a gas-tight seal element 150 to prevent air moving on the second flow path 140 from escaping to the ambient environment. However, the second chamber remains at ambient atmospheric pressure, and the cryogenic substance is unpressurised.

To make the freezer more portable, and also multi-orientable, the cryogenic substance includes an inert thickening agent. Typically, the agent includes silicon dioxide, which is preferably synthetic, amorphous, untreated fumed silicon dioxide. The agent can be, for example, Cab-o-Sil RTM or other fine particle substance which significantly increases the viscosity of the cryogenic liquid. A gas permeable barrier 152 can be provided in the second chamber to keep the conduit member and/or baffle separate of the cryogenic substance. As a result, the freezer can be subjected to a degree of mishandling and tipping without fear of spillage.

It is therefore possible to provide a controlled rate freezer with a minimal number of mechanical parts, high reliability, and increased freezing accuracy. By freezing the biological material in the first chamber, solely by the use of forced convection, allows a greater degree of uniformity of temperature to be maintained throughout the first chamber, and thus a higher degree of temperature monitoring accuracy.

By use of dual fans and two overlapping but distinct flow paths, temperature control of the first chamber is simplified. The use of fans also markedly reduces operational noise of the freezer.

The provision of a solid or viscous cryogenic substance or material increases the portability of the freezer, thus making the freezer safer to move and transport.

The embodiments described above are given by way of examples only, and modifications will be apparent to persons skilled in the art without departing from the scope of the invention as defined by the appended claims. For example, more than two fans can be provided; any other suitable means for forcibly moving air within the first chamber and/or conduit member can be utilised; and a single baffle with suitable openings or more than two baffles can be used.

## Claims

1. A controlled rate freezer (10; 110) for the controlled freezing of biological material having a material-dependent predetermined optimum freezing profile, the freezer (10; 110) comprising a first chamber (14) for holding biological material to be frozen, a second chamber (20; 120) for holding a cryogenic substance, forced convection means (22, 24) for lowering the temperature of the first chamber (14) by forcibly moving air present in the first chamber (14) towards the second chamber (20; 120) whereby heat transfer occurs at the second chamber (20; 120), and control means (26) for monitoring the temperature of the first chamber (14) and controlling the forced convection means (22, 24) based on the monitored temperature to lower the temperature of the first chamber (14) and freeze the biological material in accordance with or substantially with the material-dependent predetermined optimum freezing profile, wherein the forced convection means (22, 24) includes two recirculating flow paths (32, 40; 140) along which air in the first chamber (14) is movable at a rate controlled by the control means (26), the first flow path (32) being solely located in the first chamber (14) and spaced from the second chamber (20; 120) so that air travelling on the first flow path (32) is not subjected to direct cooling at the second chamber (20; 120), and the second flow path (40; 140) meeting the first flow path (32) and extending to the second chamber (20; 120), so that air travelling on the second flow path (40; 140) is subjected to cooling at the second chamber (20; 120) and, once cooled, is fed onto the first flow path (32).

2. A freezer as claimed in claim 1, wherein the forced convection means (22, 24) includes an electrically operable fan (22) for moving air on the first flow path (32).

3. A freezer as claimed in claim 2, wherein the forced convection means (22, 24) includes one or more first baffles (30) in the first chamber (14) to define the first flow path (32) along which the air in the first chamber (14) is movable.

4. A freezer as claimed in any one of the preceding claims, wherein the forced convection means (22, 24) includes a conduit member (16; 116) which is in fluid communication with the first chamber (14) and a portion of which extends into the second chamber (20; 120), the air present in the first chamber (14) being movable along the conduit member (16; 116).

5. A freezer as claimed in claim 4, wherein the portion of the conduit member (16; 116) which extends into the second chamber (20; 120) is closed, so that the interiors of the first and second chambers are fluidly isolated from each other.

6. A freezer as claimed in claim 4, wherein the portion of the conduit member (116) which extends into the second chamber (120) includes an opening, so that the first and second chambers are in fluid communication with each other via the conduit member (116).

7. A freezer as claimed in any one of claims 4 to 6, wherein the conduit member (16; 116) includes an electrically operable fan (24) for circulating air within the conduit member (16; 116).

8. A freezer as claimed in claim 7, wherein the forced convection means (22, 24) includes one or more second baffles (38) in the conduit member (16; 116) to define the second flow path (40; 140) which meets the first flow path (32) and along which the air in the first chamber (14) is movable.

9. A freezer as claimed in any one of the preceding claims, wherein the second chamber (20; 120) is removable.

10. A freezer as claimed in any one of the preceding claims, further comprising a cryogenic substance (44) which is held in the second chamber (20; 120).

11. A freezer as claimed in claim 10, wherein the cryogenic substance (44) is solid or viscous, thereby allowing the freezer (10; 110) to be multi-orientable.

12. A freezer as claimed in claim 11, wherein the cryogenic substance (44) includes an inert thickening agent.

13. A freezer as claimed in claim 12, wherein the thickening agent comprises silicon dioxide.

14. A freezer as claimed in any one of the previous claims, wherein the freezer (10; 110) is portable.

15. A freezer as claimed in any one of the previous claims, wherein the freezer (10; 110) is battery operable.

16. A freezer as claimed in any one of the preceding claims, wherein the forced convection means (22, 24) is the sole means for cooling the first chamber (14).

17. A method of controlled freezing of biological material, the method comprising the steps of :
a) positioning biological material to be frozen in a first chamber (14);
b) positioning a cryogenic substance in a second chamber (20; 120);
c) forcibly moving air present in the first chamber (14) towards the second chamber (20; 120), so that heat transfer occurs at the second chamber (20; 120) and thus lowers the temperature of the first chamber (14), two recirculating flow paths (32, 40; 140) being provided along which the air in the first chamber (14) is movable, the first flow path (32) being solely located in the first chamber (14) and spaced from the second chamber (20; 120) so that air travelling on the first flow path (32) is not subjected to direct cooling at the second chamber (20; 120), and the second flow path (40; 140) meeting the first flow path (32) and extending to the second chamber (20; 120), so that air travelling on the second flow path (40; 140) is subjected to cooling at the second chamber (20; 120) and, once cooled, is fed onto the first flow path (32); and
d) monitoring the temperature of the first chamber (14) and controlling a rate of movement of the air in the first chamber (14), along the two recirculating flow paths (32, 40; 140), based on the monitored temperature, so that the lowering of the temperature of the first chamber (14), and thus the freezing of the biological material, follows a material-dependent predetermined optimum or substantially optimum freezing profile.
